# EUROPÄISCHE PATENTSCHRIFT

(11) **EP 3 420 246 B1**
(45) Veröffentlichungstag und Bekanntmachung des Hinweises auf die Patenterteilung: **01.07.2020**
(21) Anmeldenummer: 17716440.7
(22) Anmeldetag: 23.02.2017
(51) Int. Cl.: F16G 1/20

(54) **VERFAHREN ZUR HERSTELLUNG ENDLOSER METALLBÄNDER BELIEBIGER BREITE**
METHOD FOR PRODUCING CONTINUOUS METAL STRIPS OF ANY WIDTH
PROCÉDÉ DE FABRICATION DE BANDES MÉTALLIQUES SANS FIN, DE LARGEUR VOULUE

(30) Priorität: 23.02.2016 AT 501252016
(43) Veröffentlichungstag der Anmeldung: 02.01.2019
(73) Patentinhaber: Berndorf Band GmbH, 2560 Berndorf (AT)
(72) Erfinder: STÜCKLER, Thomas, 2630 Ternitz (AT); WAHL, Christian, 2560 Berndorf (AT)
(74) Vertreter: Burger, Hannes
(86) Internationale Anmeldenummer: PCT/AT2017/060042
(87) Internationale Veröffentlichungsnummer: WO 2017/143376

(56) Entgegenhaltungen:
- WO-A1-2009/080870
- WO-A1-2014/089594
- GB-A- 485 242

## Beschreibung

Die Erfindung betrifft ein endloses Metallband mit einer Längserstreckung beziehungsweise einem Umfang und einer Breitenerstreckung, welches durch Verschweißen mehrerer Metallband-Einzelteile hergestellt ist. Weiterhin betrifft die Erfindung ein Verfahren zur Herstellung wenigstens eines endlosen Metallbands, das eine Längserstreckung beziehungsweise einen Umfang und eine Breitenerstreckung aufweist, bei dem mehrere Metallband-Einzelteile aus zumindest einem bandförmigen Grundmaterial respektive Basisband zu dem zumindest einem Metallband verschweißt werden. Schließlich betrifft die Erfindung eine Verwendung eines solchen Metallbands.

Ein Metallband sowie ein Herstellungsverfahren der genannten Art sind aus dem Stand der Technik grundsätzlich bekannt. Üblicherweise wird dabei ein entsprechend langer Teil von einem Basisband abgetrennt und dann durch eine quer zum Metallband verlaufende Schweißnaht zu einem endlosen Metallband verschweißt. Ist das Basisband breiter als das Metallband, so wird ein entsprechender Streifen vom Basisband beziehungsweise Metallband abgetrennt. Ist das Basisband schmäler, so werden mehrere Basisbänder beziehungsweise Metallbänder entlang deren Längskanten zusammengeschweißt.

Nachteilig ist bei diesem Herstellungsverfahren, dass abhängig von der Breite des zur Verfügung stehenden Grundmaterials und von der gewünschten Breite des fertigen Metallbands, zum Teil erhebliche Mengen an Verschnitt anfallen. Ist das Basisband zum Beispiel 2 m breit, und die Breite des fertigen Metallbands soll beispielsweise 2,10 m betragen, so müssen zwei Basisbänder der Länge nach verschweißt werden und ein 1,90 m breiter Teil abgeschnitten werden. Dieses Beispiel macht deutlich, dass unter Umständen fast 50 % des eingesetzten Materials als Verschnitt anfallen. Insbesondere bei sehr teurem Grundmaterial, beispielsweise bei einem Edelstahlband hoher Qualität, führt das bekannte Herstellungsverfahren zu hohen Herstellungskosten. Ohne Verschnitt können faktisch nur Vielfache der Basisbandbreite hergestellt werden.

Darüber hinaus kommt es, sofern mehrere Basisbänder entlang ihrer Längskanten verschweißt werden, beim Verschweißen zu einem endlosen Metallband zu einer Kreuzung von Schweißnähten. Diese Kreuzungen sind insofern sehr problematisch, als es dort zu einer starken Gefügeänderung und auch Schwächung des Materials kommt.

Die WO 2009/080870 A1 offenbart dazu auch ein Verfahren zum Herstellen eines Metallbandes, das in einer Papier-, Pappe- oder Endbearbeitungsmaschine verwendet wird. Bei diesem Verfahren wird das endlose Metallband dadurch gebildet, dass mehrere Bandstücke Seite an Seite und/oder hintereinander verschweißt werden, beispielsweise mit Hilfe des TIG- oder MIG/MAG-Verfahrens. Das Schleifen des Metallbandes auf seine endgültige Dicke erfolgt im Wesentlichen nur auf der äußeren Oberfläche.

Eine Aufgabe der Erfindung ist es daher, ein verbessertes Metallband beziehungsweise ein verbessertes Verfahren zu dessen Herstellung anzugeben. Insbesondere sollen der Verschnitt gering gehalten und einander kreuzende Schweißnähte vermieden werden.

Die Aufgabe der Erfindung wird mit einem Metallband der eingangs genannten Art gelöst, bei dem eine Walzrichtung der Metallband-Einzelteile und alle Schweißnähte quer zur Längserstreckung beziehungsweise quer zum Umfang des Metallbands verlaufen, wobei die Walzrichtung parallel zu den Schweißnähten verläuft.

Die Aufgabe der Erfindung wird weiterhin mit einem Herstellungsverfahren der eingangs genannten Art gelöst, bei dem eine Walzrichtung der Metallband-Einzelteile beziehungsweise des Basisbands sowie alle Schweißnähte quer zur Längserstreckung beziehungsweise quer zum Umfang des Metallbands angeordnet werden, wobei die Walzrichtung parallel zu den Schweißnähten verläuft.

Auf diese Weise können beliebige Bandbreiten (und nicht nur Vielfache einer Basisbandbreite) nahezu ohne Verschnitt hergestellt werden. Dadurch, dass alle Schweißnähte quer zur Längserstreckung / zum Umfang des Metallbands verlaufen, können einander kreuzendes Schweißnähte und damit starke Verwerfungen im Gefüge des Metallbands beziehungsweise ausgeprägte Schwachstellen völlig vermieden werden.

Das endlose Metallband der genannten Art ist zwischen 1 m und 200 m lang, zwischen 1 m und 10 m breit und zwischen 0,3 mm bis 2,5 mm dick. Im Speziellen kann das Metallband in einer Bandpresse, auf einem Fahrzeugprüfstand oder in einem Backofen verwendet werden. Zudem ist auch der Einsatz in der Papierindustrie oder Zellstoffindustrie vorstellbar, etwa in einer Papierherstellungsmaschine oder in einer Zellstoffherstellungsmaschine.

Auch das zumindest eine Basisband kann, wie das Metallband, eine Längserstreckung und eine Breitenerstreckung aufweisen, wobei die Breitenerstreckung insbesondere geringer ist als die Längserstreckung. Die Walzrichtung ist dabei insbesondere in der Längserstreckung des Basisbands ausgerichtet, und die Längserstreckung des Basisbands wird insbesondere quer zur Längserstreckung / zum Umfang des Metallbands ausgerichtet.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn die Schweißnähte rechtwinkelig zur Längserstreckung / zum Umfang des Metallbands verlaufen. Dadurch fällt besonders wenig Verschnitt bei der Herstellung des Metallbands an.

Vorteilhaft ist es aber auch, wenn die Schweißnähte schräg zur Längserstreckung / zum Umfang des Metallbands verlaufen. Im Betrieb des Metallbands wird dieses häufig gespannt, teilweise mit erheblichen Zugkräften. Durch die vorgeschlagene Ausrichtung der Schweißnähte kann die in diesen auftretende Zugspannung auf einem vergleichsweise niedrigem Niveau gehalten werden. Zudem wird die Neigung zur Rissbildung vermindert.

Günstig ist es zudem, wenn mehrere Metallband-Einzelteile von dem zumindest einen Basisband abgetrennt werden, welche hinsichtlich ihrer Dimensionen jeweils auf die Breite des Metallbands abgestimmt sind, und wenn diese Metallband-Einzelteile dann direkt zu dem Metallband verschweißt werden. Auf diese Weise kann das Metallband ohne den Umweg über ein Zwischenprodukt hergestellt werden.

Vorteilhaft ist es aber auch,
- wenn a) mehrere Basisband-Einzelteile von dem zumindest einen Basisband abge trennt werden und diese zu einem Zwischenprodukt verschweißt werden oder b) mehrere Basisbänder direkt und ohne Trennschnitt zu einem Zwischenprodukt verschweißt werden und
- wenn das Zwischenprodukt quer zu der entstehenden Schweißnaht beziehungsweise quer zu den entstehenden Schweißnähten aufgetrennt wird und die resultierenden Zwischenprodukt-Einzelteile zu dem zumindest einen Metallband verschweißt werden.

Bei dieser Variante des Verfahrens wird also durch Verschweißen mehrerer Basisbänder oder mehrerer Basisband-Einzelteile entlang deren Längskanten ein Zwischenprodukt hergestellt, aus dem dann dass Metallband erzeugt wird. Vorteilhaft können so relativ lange Schweißnähte ausgeführt werden, die in der Regel mit höherer Qualität ausgeführt werden können, als viele kurze Schweißnähte. Im Endergebnis kann ein endloses Metallband mit besonders hoher Güte hergestellt werden. Die genannten Schweißnähte sind dann besonders lang, wenn die Basisbänder direkt und ohne Trennschnitt zu einem Zwischenprodukt verschweißt werden (Fall b). Selbstverständlich können aber auch mehrere Basisband-Einzelteile von dem zumindest einen Basisband abgetrennt werden und diese zu einem Zwischenprodukt verschweißt werden (Fall a).

Ein Trennschnitt kann generell durch Abscheren, Plasmaschneiden, Brennschneiden, Laserschneiden, Nibbeln und so weiter ausgeführt werden.

Günstig ist es, wenn mehrere Zwischenprodukt-Einzelteile zu einem Metallband verschweißt werden. Dadurch braucht das Zwischenprodukt nicht übermäßig breit zu sein.

Günstig ist es aber auch, wenn ein einziger Zwischenprodukt-Einzelteil zu einem Metallband verschweißt wird. Dies gelingt dann, wenn ein Zwischenprodukt entsprechender Breite hergestellt wird. Das Anfertigen des Metallbands kann dadurch besonders rationell erfolgen.

Besonders vorteilhaft ist es auch, wenn das Abtrennen von wenigstens zwei Metallband-Einzelteilen beziehungsweise von wenigstens zwei Basisband-Einzelteilen beziehungsweise von wenigstens zwei Zwischenprodukt-Einzelteilen in einem Schritt beziehungsweise gleichzeitig erfolgt. Das Anfertigen des Metallbands kann dadurch besonders rationell erfolgen. Beispielsweise werden dazu zwei oder mehr Schneidköpfe gleichzeitig entlang von zwei oder mehreren Trennlinien verfahren.

Vorteilhaft ist es zudem, wenn das Abtrennen eines Metallband-Einzelteils beziehungsweise eines Basisband-Einzelteils beziehungsweise eines Zwischenprodukt-Einzelteils entlang einer geraden Trennlinie erfolgt. Dadurch ist das Aufteilen des Basisbands respektive des mehrere Basisbänder umfassenden Zwischenprodukts besonders einfach.

Günstig ist es darüber hinaus, wenn das Metallband nach dem Verschweißen geschliffen wird. Dadurch kann eine ebene Bandoberfläche mit praktisch einheitlichem Aussehen erzeugt werden.

Günstig ist es auch, wenn das Metallband nach dem Verschleifen poliert wird. Auf diese Weise kann eine noch höherwertige Oberfläche hergestellt werden.

Günstig ist es schließlich, wenn das Metallband nach dem Verschleifen oder Polieren beschichtet wird. Beispielsweise kann das Metallband mit einer Teflonschicht (Schicht aus Polytetrafluoräthylen, kurz PTFE) oder Chromschicht versehen werden. Darüber hinaus kann das Metallband mit einer Prägestruktur oder Ätzstruktur versehen werden.

Zum besseren Verständnis der Erfindung wird diese anhand der nachfolgenden Figuren näher erläutert. Es zeigen:
- Fig. 1: ein Beispiel eines endlosen Metallbands mit rechtwinkelig zu dessen Längskanten verlaufenden Schweißnähten in Schrägansicht;
- Fig. 2: ähnlich wie Fig. 1, jedoch mit schräg verlaufenden Schweißnähten;
- Fig. 3: ein Beispiel für ein Zwischenprodukt mit mehreren miteinander verschweißten Basisbändern und rechtwinkelig zu dessen Längskanten verlaufenden Trennlinien;
- Fig. 4: ähnlich wie Fig. 3, jedoch mit schräg verlaufenden Trennlinien und
- Fig. 5: ähnlich wie Fig. 4, jedoch mit unterschiedlich breiten Zwischenprodukt-Einzelteilen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

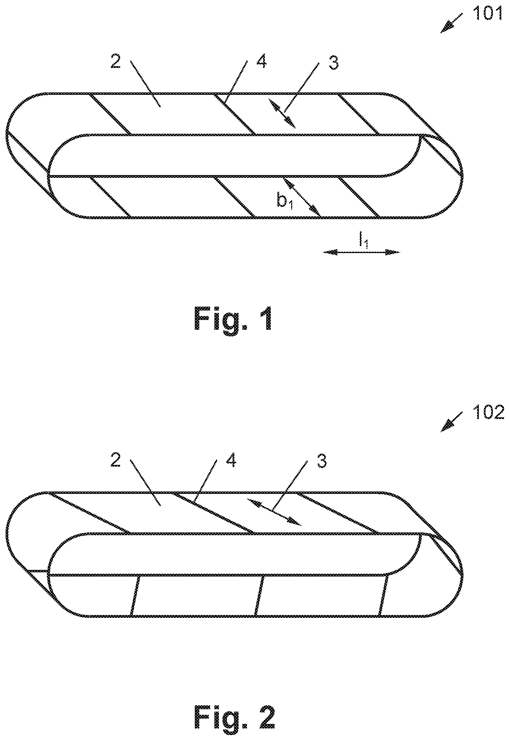

Fig. 1 zeigt ein erstes Beispiel eines endlosen Metallbands 101, welches eine Längserstreckung 1₁ (beziehungsweise einen Umfang 1₁) und eine Breitenerstreckung b₁ aufweist und welches durch Verschweißen mehrerer Metallband-Einzelteile 2 hergestellt ist. Eine Walzrichtung 3 der Metallband-Einzelteile 2 und alle Schweißnähte 4 verlaufen dabei quer zur Längserstreckung 1₁ des Metallbands 101. Die Breitenerstreckung b₁ ist in dem gezeigten Beispiel geringer als die Längserstreckung 1₁ beziehungsweise als der Umfang 1₁. Dies ist aber nicht zwingend der Fall.

In dem konkret dargestellten Beispiel verlaufen die Schweißnähte 4 rechtwinkelig zur Längserstreckung / zum Umfang 1₁ des Metallbands 101. Dies ist aber keine zwingende Bedingung. Denkbar ist vielmehr auch, dass die Schweißnähte 4 schräg zur Längserstreckung / zum Umfang 1₁ des Metallbands verlaufen, so wie das in der Fig. 2 für das Metallband 102 dargestellt ist. Denkbar ist grundsätzlich auch, dass die Schweißnähte 4 in unterschiedlichen Richtungen verlaufen, die Schweißnähte 4 einander aber nicht kreuzen.

In den gezeigten Beispielen verläuft eine Walzrichtung 3 parallel zu den Schweißnähten 4.

Generell sind die gezeigten Metallbänder 101, 102 zwischen 1 m und 200 m lang, zwischen 1 m und 10 m breit und zwischen 0,3 mm bis 2,5 mm dick. Zudem ist im Speziellen eine Verwendung der Metallbänder 101, 102 in einer Bandpresse auf einem Fahrzeug- oder Flugzeugprüfstand oder in einem Backofen denkbar. Zudem ist auch der Einsatz in der Papierindustrie oder Zellstoffindustrie vorstellbar, beispielsweise in einer Papierherstellungsmaschine oder in einer Zellstoffherstellungsmaschine.

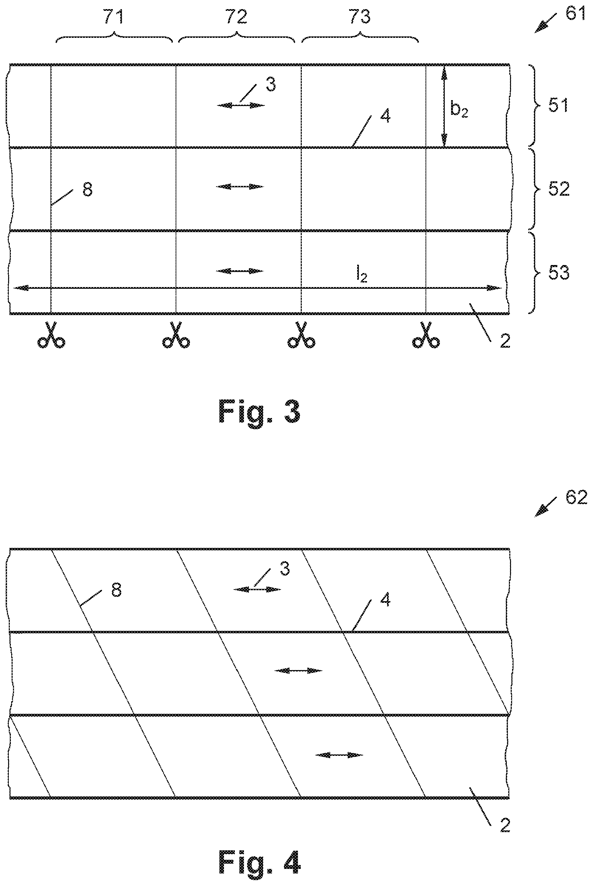

Bei einem Verfahren zur Herstellung wenigstens eines endlosen Metallbands 101, 102 der genannten Art können mehrere Basisbänder zu einem Zwischenprodukt verschweißt werden. Fig. 3 zeigt dazu ein Beispiel, bei dem drei Basisbänder 51..53 direkt und ohne Trennschnitt zu einem Zwischenprodukt 61 verschweißt wurden. Jedes der Basisbänder 51..53 weist eine Längserstreckung l₂ und eine Breitenerstreckung b₂ auf, welche in dem gezeigten Beispiel geringer ist als die Längserstreckung l₂. Die Walzrichtung 3 ist jeweils parallel zur Längserstreckung l₁ der Basisbänder 51..53 ausgerichtet.

In einem nachfolgenden Bearbeitungsschritt wird das Zwischenprodukt 61 quer zu den entstandenen Schweißnähten 4 aufgetrennt, und die resultierenden Zwischenprodukt-Einzelteile 71..73 werden zu einem Metallband 101, 102 verschweißt. In der Fig. 3 ist mit Scheren-Symbolen angedeutet, dass das Zwischenprodukt 61 entlang der Trennlinien 8 aufgetrennt wird, die in diesem speziellen Beispiel als gerade Trennlinien 8 ausgebildet sind, welche normal auf die Längserstreckung l₂ der Basisbänder 51..53 ausgerichtet sind. Selbstverständlich kann eine Trennlinie 8 auch zum Beispiel entlang eines Bogens verlaufen. Generell kommen alle Trennverfahren wie zum Beispiel Scheren, Plasmaschneiden, Brennschneiden, Laserschneiden, Nibbeln und so weiter in Betracht.

Das Verschweißen der Basisbänder 51..53 entlang deren Längskanten kann insbesondere dadurch erfolgen, dass die noch nicht verschweißten Basisbänder 51..53 von einer ersten Haspel oder mehreren ersten Haspeln abgewickelt werden und dass das Zwischenprodukt 61im verschweißten Zustand auf eine zweite Haspel aufgewickelt wird. Die ersten Haspeln sind dabei nicht notwendigerweise koaxial angeordnet, sondern können sich auch um Achsen drehen, die zueinander beabstandet sind. Das Schweißen erfolgt dabei insbesondere gleichzeitig während dem Auf-/Abwickeln. Der Schweißkopf kann still stehen, wenn die Vorschubbewegung durch das Auf-/Abwickeln bewirkt wird. Der Prozess ist dann kontinuierlich. Denkbar ist weiterhin, dass ein Stück von den Basisbändern 51..53 abgewickelt wird, die Bewegung der Basisbänder 51..53 gestoppt wird, ein Stück einer Schweißnaht 4 durch Verfahren eines Schweißkopfs ausgeführt wird, der verschweißte Teil aufgewickelt wird, der Schweißkopf in die Ausgangsposition gefahren wird und der Ablauf so lange rekursiv ausgeführt wird, bis die Verschweißung der Basisbänder 51..53 vollständig erfolgt ist.

Generell kann die Ausführung mehrerer Schweißnähte 4 und damit das Verschweißen von mehr als zwei Basisbändern 51..53 gleichzeitig erfolgen. Das Ausführen der Schweißnähte 4 kann aber auch hintereinander erfolgen. Schließlich kann das Ausführen der Schweißnähte 4 auch teilweise parallel und teilweise hintereinander erfolgen.

Ähnliches gilt auch für das Verschweißen der Metallband-Einzelteile 2 respektive der Zwischenprodukt-Einzelteile 71..73. Auch hierbei können die Schweißnähte 4 hintereinander ausgeführt werden, oder es werden mehrere Schweißnähte 4 gleichzeitig ausgeführt. Zudem kann auch das Metallband 101, 102 auf eine Haspel aufgewickelt respektive von einer Haspel abgewickelt werden.

In der Fig. 3 ist erkennbar, dass eine Walzrichtung 3 in Längserstreckung l₂ des Basisbands 51..53 ausgerichtet ist und die Längserstreckung l₂ des Basisbands 51..53 quer zur Längserstreckung / zum Umfang l₁ des Metallbands 101, 102 ausgerichtet ist. Dementsprechend sind eine Walzrichtung 3 der Metallband-Einzelteile 2 beziehungsweise der Basisbänder 51..53 sowie die Schweißnähte 4 quer zur Längserstreckung / zum Umfang l₁ des Metallbands 101, 102 ausgerichtet.

In einer Variante des Verfahrens werden mehrere Zwischenprodukt-Einzelteile 71..73 zu einem Metallband 101, 102 verschweißt. Bei ausreichender Gesamtbreite des Zwischenprodukts 61..63 ist aber denkbar, dass ein einziger Zwischenprodukt-Einzelteil 71..73 zu einem Metallband 101, 102 verschweißt wird.

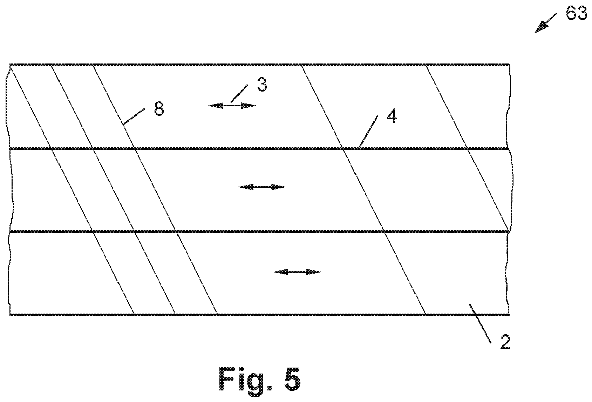

In der Fig. 3 verlaufen die Trennlinien 8 rechtwinkelig zu den Schweißnähten 4, der Walzrichtung 3 und der Längserstreckung l₂ der Basisbänder 51..53. Denkbar ist aber auch, dass die Trennlinien 8 schräg zu den Schweißnähten 4, der Walzrichtung 3 und der Längserstreckung l₂ der Basisbänder 51..53 verlaufen, so wie dies in der Fig. 4 dargestellt ist. Zudem ist auch vorstellbar, dass unterschiedlich breite Zwischenprodukt-Einzelteile 71..73 aus dem Zwischenprodukt hergestellt werden, so wie dies in der Fig. 5 für das Zwischenprodukt 63 dargestellt ist.

In den vorangegangenen Beispielen wurde davon ausgegangen, dass die Basisbänder 51..53 direkt und ohne Trennschnitt zu einem Zwischenprodukt 61..63 verschweißt werden. Dies ist aber keine zwingende Bedingung. Denkbar ist vielmehr auch, dass mehrere Basisband-Einzelteile von dem zumindest einen Basisband 51..53 abgetrennt werden und dann zu einem Zwischenprodukt 61..63 verschweißt werden.

Vorstellbar ist zudem, dass mehrere Metallband-Einzelteile 2 von dem zumindest einen Basisband 51..53 abgetrennt werden, welche hinsichtlich ihrer Dimensionen jeweils auf die Breite b₁ des Metallbands 101, 102 abgestimmt sind, und dass diese Metallband-Einzelteile 2 dann direkt, das heißt ohne Zwischenprodukt 61..63, zu dem Metallband 101, 102 verschweißt werden.

Generell kann das Abtrennen von wenigstens zwei Metallband-Einzelteilen 2 beziehungsweise von wenigstens zwei Basisband-Einzelteilen beziehungsweise von wenigstens zwei Zwischenprodukt-Einzelteilen 71..73 in einem Schritt beziehungsweise gleichzeitig erfolgen, beispielsweise indem zwei Laserschneidköpfe gleichzeitig entlang von zwei verschiedenen Trennlinien 8 verfahren werden.

Die Metallbänder 101, 102 können nach dem Verschweißen geschliffen werden und nach dem Verschleifen poliert werden. Nach dem Verschleifen oder Polieren können die Metallbänder 101, 102 zudem beschichtet werden. Beispielsweise können die Metallbänder 101, 102 mit einer Teflonschicht oder Chromschicht versehen werden. Darüber hinaus können die Metallbänder 101, 102 mit einer Prägestruktur oder Ätzstruktur versehen werden.

Die Ausführungsbeispiele zeigen mögliche Ausführungsvarianten erfindungsgemäßer Metallbänder 101, 102 und Zwischenprodukte 61..63 hierfür, wobei an dieser Stelle bemerkt sei, dass die Erfindung nicht auf die speziell dargestellte Ausführungsvariante derselben eingeschränkt ist, sondern auch andere Ausführungsvarianten möglich sind, deren Herleitung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzel-merkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Metallbänder 101, 102 und Zwischenprodukte 61..63 in der Realität auch mehr oder weniger Bestandteile als dargestellt umfassen können und in den Figuren bisweilen stark vereinfacht dargestellt sind.

Der Ordnung halber sei abschließend darauf hingewiesen, dass die dargestellten Vorrichtungen sowie ihre Bestandteile zum besseren Verständnis ihres Aufbaus darüber hinaus teilweise unmaßstäblich und/oder vergrößert und/oder verkleinert dargestellt wurden.

### Bezugszeichenaufstellung

- 101, 102: endloses Metallband
- 2: Metallband-Einzelteil
- 3: Walzrichtung
- 4: Schweißnaht
- 51..53: Basisband
- 61..63: Zwischenprodukt
- 71..73: Zwischenprodukt-Einzelteil
- 8: Trennlinie
- b₁: Breite Metallband
- b₂: Breite Basisband
- l₁: Länge/Umfang Metallband
- ₗ₂: Länge Basisband

## Patentansprüche

1. Endloses Metallband (101, 102) mit einer Längserstreckung / einem Umfang (l₁) zwischen 1 m und 200 m, einer Breitenerstreckung (b₁) zwischen 1 m und 10 m und einer Dicke zwischen 0,3 mm bis 2,5 mm, welches durch Verschweißen mehrerer Metallband-Einzelteile (2) hergestellt ist,
**dadurch gekennzeichnet, dass**
eine Walzrichtung (3) der Metallband-Einzelteile (2) und alle Schweißnähte (4) quer zur Längserstreckung / zum Umfang (l₁) des Metallbands (101, 102) verlaufen, wobei die Walzrichtung (3) parallel zu den Schweißnähten (4) verläuft.

2. Endloses Metallband (101, 102) nach Anspruch 1, **dadurch gekennzeichnet, dass** die Schweißnähte (4) rechtwinkelig zur Längserstreckung / zum Umfang (l₁)des Metallbands (101, 102) verlaufen.

3. Endloses Metallband (101, 102) nach Anspruch 1, **dadurch gekennzeichnet, dass** die Schweißnähte (4) schräg zur Längserstreckung / zum Umfang (l₁)des Metallbands (101, 102) verlaufen.

4. Verfahren zur Herstellung wenigstens eines endlosen Metallbands (101, 102), das eine Längserstreckung / einen Umfang (l₁)zwischen 1 m und 200 m, eine Breitenerstreckung (b₁) zwischen 1 m und 10 m und eine Dicke zwischen 0,3 mm bis 2,5 mm aufweist, bei dem mehrere Metallband-Einzelteile (2) aus zumindest einem bandförmigen Grundmaterial respektive Basisband (51..53) zu dem Metallband (101, 102)verschweißt werden,
**dadurch gekennzeichnet, dass**
eine Walzrichtung (3) der Metallband-Einzelteile (2) beziehungsweise des Basisbands (51..53) sowie alle Schweißnähte (4) quer zur Längserstreckung / zum Umfang (l₁)des Metallbands (101, 102) ausgerichtet werden, wobei die Walzrichtung (3) parallel zu den Schweißnähten (4) verläuft.

5. Verfahren nach Anspruch 4, **dadurch gekennzeichnet, dass** auch das zumindest eine Basisband (51..53) eine Längserstreckung (l₂) und eine Breitenerstreckung (b₂) aufweist und die Walzrichtung (3) in Längserstreckung (l₂) des Basisbands (51..53) ausgerichtet ist und die Längserstreckung (l₂) des Basisbands (51..53) quer zur Längserstreckung / zum Umfang (l₁) des Metallbands (101, 102) ausgerichtet wird.

6. Verfahren nach Anspruch 4 oder 5, **dadurch gekennzeichnet, dass** mehrere Metallband-Einzelteile (2) von dem zumindest einen Basisband (51..53) abgetrennt werden, welche hinsichtlich ihrer Dimensionen jeweils auf die Breite (b₁) des Metallbands (101, 102) abgestimmt sind, und diese Metallband-Einzelteile (2) dann direkt zu dem Metallband (101, 102) verschweißt werden.

7. Verfahren nach Anspruch 4 oder 5, **dadurch gekennzeichnet,**
- **dass** a) mehrere Basisband-Einzelteile von dem zumindest einen Basisband (51..53) abgetrennt werden und diese zu eine Zwischenprodukt (61..63) verschweißt werden oder b) mehrere Basisbänder (51..53) direkt und ohne Trennschnitt zu einem Zwischenprodukt (61..63) verschweißt werden und
- **dass** das Zwischenprodukt (61..63) quer zu der entstehenden Schweißnaht (4) beziehungsweise quer zu den entstehenden Schweißnähten (4) aufgetrennt wird und die resultierenden Zwischenprodukt-Einzelteile (71..73) zu dem zumindest einen Metallband (101, 102) verschweißt werden.

8. Verfahren nach Anspruch 7, **dadurch gekennzeichnet, dass** mehrere Zwischenprodukt-Einzelteile (71..73) zu einem Metallband (101, 102) verschweißt werden.

9. Verfahren nach Anspruch 7, **dadurch gekennzeichnet, dass** eine einziger Zwischenprodukt-Einzelteil (71..73) zu einem Metallband (101, 102) verschweißt wird.

10. Verfahren nach einem der Ansprüche 4 bis 9, **dadurch gekennzeichnet, dass** das Abtrennen von wenigstens zwei Metallband-Einzelteilen (2) beziehungsweise von wenigstens zwei Basisband-Einzelteilen beziehungsweise von wenigstens zwei Zwischenprodukt-Einzelteilen (71..73) in einem Schritt beziehungsweise gleichzeitig erfolgt.

11. Verfahren nach einem der Ansprüche 4 bis 10, **dadurch gekennzeichnet, dass** das Abtrennen eines Metallband-Einzelteils (2) beziehungsweise eines Basisband-Einzelteils beziehungsweise eines Zwischenprodukt-Einzelteils (71..73) entlang einer geraden Trennlinie (8) erfolgt.

12. Verfahren nach einem der Ansprüche 4 bis 11, **dadurch gekennzeichnet, dass** das Metallband (101, 102) nach dem Verschweißen geschliffen wird.

13. Verfahren nach Anspruch 12, **dadurch gekennzeichnet, dass** das Metallband (101, 102) nach dem Verschleifen poliert wird.

14. Verfahren nach Anspruch 12 oder 13, **dadurch gekennzeichnet, dass** das Metallband (101, 102) nach dem Verschleifen oder Polieren beschichtet wird.

15. Verwendung eines endlosen Metallbands (101, 102) mit einer Längserstreckung / einem Umfang (l₁) zwischen 1 m und 200 m, einer Breitenerstreckung (b₁) zwischen 1 m und 10 m und einer Dicke zwischen 0,3 mm bis 2,5 mm, welches durch Verschweißen mehrerer Metallband-Einzelteile (2) hergestellt ist, wobei eine Walzrichtung (3) der Metallband-Einzelteile (2) und alle Schweißnähte (4) quer zur Längserstreckung / zum Umfang (l₁) des Metallbands (101, 102) verlaufen und die Walzrichtung (3) parallel zu den Schweißnähten (4) verläuft, in einer Bandpresse oder auf einem Fahrzeugprüfstand oder in einem Backofen oder in einer Papierherstellungsmaschine oder in einer Zellstoffherstellungsmaschine.

## Claims

1. An endless metal belt (101, 102) having a length extension/a circumference (1₁) of between 1 m and 200 m, a width extension (b₁) of between 1 m and 10 m and a thickness of between 0.3 mm and 2.5 mm which is produced by welding together multiple individual metal belt parts (2),
**characterized in that**
a rolling direction (3) of the individual metal belt parts (2) and all the weld seams (4) extend transversely to the length extension/to the circumference (1₁) of the metal belt (101, 102), wherein the rolling direction (3) extends in parallel to the weld seams (4).

2. The endless metal belt (101, 102) according to claim 1, **characterized in that** the weld seams (4) extend at a right angle to the length extension/to the circumference (l₁) of the metal belt (101, 102).

3. The endless metal belt (101, 102) according to claim 1, **characterized in that** the weld seams (4) extend obliquely to the length extension/to the circumference (l₁) of the metal belt (101, 102).

4. A method for producing at least one endless metal belt (101, 102) which has a length extension/a circumference (l₁) of between 1 m and 200 m, a width extension (b₁) of between 1 m and 10 m and a thickness of between 0.3 mm and 2.5 mm, in which multiple individual metal belt parts (2) made from at least one belt-shaped base material or base belt (51..53) are welded together to obtain the metal belt (101, 102),
**characterized in that**
a rolling direction (3) of the individual metal belt parts (2) and/or of the base belt (51..53) as well as all the weld seams (4) are oriented transversely to the length extension/to the circumference (l₁) of the metal belt (101, 102), wherein the rolling direction (3) extends in parallel to the weld seams (4).

5. The method according to claim 4, **characterized in that** the at least one base belt (51..53) also has a length extension (l₂) and a width extension (b₂) and the rolling direction (3) is oriented in the direction of the length extension (l₂) of the base belt (51..53) and the length extension (l₂) of the base belt (51..53) is oriented transversely to the length extension/to the circumference (l₁) of the metal belt (101, 102).

6. The method according to claim 4 or 5, **characterized in that** multiple individual metal belt parts (2) are cut from the at least one base belt (51..53) which, in terms of their dimensions, each match the width (b₁) of the metal belt (101, 102) and these individual metal belt parts (2) are then welded together directly to obtain the metal belt (101, 102).

7. The method according to claim 4 or 5, **characterized in that**
- a) multiple individual base belt parts are cut from the at least one base belt (51..53) and these are welded together to obtain an intermediate product (61..63) or b) multiple base belts (51..53) are welded together directly and without a separating cut to obtain an intermediate product (61..63) and
- the intermediate product (61..63) is separated transversely to the resulting weld seam (4) or transversely to the resulting weld seams (4) and the resulting individual intermediate product parts (71..73) are welded together to obtain the at least one metal belt (101, 102).

8. The method according to claim 7, **characterized in that** multiple individual intermediate product parts (71..73) are welded together to obtain a metal belt (101, 102).

9. The method according to claim 7, **characterized in that** a single individual intermediate product part (71..73) is welded to obtain a metal belt (101, 102).

10. The method according to one of claims 4 to 9, **characterized in that** cutting of at least two individual metal belt parts (2) and/or of at least two individual base belt parts and/or at least two individual intermediate product parts (71..73) takes place in one step and/or simultaneously.

11. The method according to one of claims 4 to 10, **characterized in that** cutting of an individual metal belt part (2) and/or of an individual base belt part and/or of an individual intermediate product part (71..73) is effected along a straight cutting line (8).

12. The method according to one of claims 4 to 11, **characterized in that** the metal belt (101, 102) is ground after the welding operation.

13. The method according to claim 12, **characterized in that** the metal belt (101, 102) is polished after the grinding operation.

14. The method according to claim 12 or 13, **characterized in that** the metal belt (101, 102) is coated after the grinding or polishing operations.

15. Use of an endless metal belt (101, 102) having a length extension/a circumference (1₁) of between 1 m and 200 m, a width extension (b₁) of between 1 m and 10 m and a thickness of between 0.3 mm and 2.5 mm which is produced by welding together multiple individual metal belt parts (2), wherein a rolling direction (3) of the individual metal belt parts (2) and all the weld seams (4) extend transversely to the length extension/to the circumference (l₁) of the metal belt (101, 102) and the rolling direction (3) extends in parallel to the weld seams (4), in a belt press or on a vehicle test rig or in an oven or in a paper production machine or in a pulp production machine.

## Revendications

1. Bande métallique sans fin (101, 102) avec une extension longitudinale / une circonférence (l₁) entre 1 m et 200 m, une extension en largeur (b₁) entre 1 m et 10 m et une épaisseur entre 0,3 mm et 2,5 mm, qui est fabriquée par soudure de plusieurs parties de bande métallique (2),
**caractérisée en ce que**
une direction de laminage (3) des parties de bande métallique (2) et tous les cordons de soudure (4) s'étendent transversalement par rapport à l'extension longitudinale / à la circonférence (l₁) de la bande métallique (101, 102), dans lequel la direction de laminage (3) s'étend parallèlement aux cordons de soudure (4).

2. Bande métallique sans fin (101, 102) selon la revendication 1, **caractérisée en ce que** les cordons de soudure (4) s'étendent à angle droit par rapport à l'extension longitudinale / à la circonférence (l₁) de la bande métallique (101, 102).

3. Bande métallique sans fin (101, 102) selon la revendication 1, **caractérisée en ce que** les cordons de soudure (4) s'étendent de manière oblique par rapport à l'extension longitudinale / à la circonférence (l₁) de la bande métallique (101, 102).

4. Procédé de fabrication d'au moins une bande métallique sans fin (101, 102), qui présente une extension longitudinale / circonférence (l₁) entre 1 m et 200 m, une extension en largeur (b₁) entre 1 m et 10 m et une épaisseur entre 0,3 mm et 2,5 mm, dans lequel plusieurs parties de bande métallique (2) constituées d'au moins un matériau de base en forme de bande respectivement d'une bande de base (51...53) sont soudées afin d'obtenir la bande métallique (101, 102),
**caractérisée en ce que**
une direction de laminage (3) des parties de bande métallique (2) respectivement de la bande de base (51...53) ainsi que tous les cordons de soudure (4) sont orientés transversalement par rapport à l'extension longitudinale / à la circonférence (l₁) de la bande métallique (101, 102), dans laquelle la direction de laminage (3) s'étend parallèlement aux cordons de soudure (4).

5. Procédé selon la revendication 4, **caractérisé en ce que** l'au moins une bande de base (51...53) présente également une extension longitudinale (l₂) et une extension en largeur (b₂) et la direction de laminage (3) est également orientée dans l'extension longitudinale (l₂) de la bande de base (51...53) et l'extension longitudinale (l₂) de la bande de base (51...53) est orientée transversalement par rapport à l'extension longitudinale / à la circonférence (l₁) de la bande métallique (101, 102).

6. Procédé selon la revendication 4 ou 5, **caractérisé en ce que** plusieurs parties de bande métallique (2) sont séparées de l'au moins une bande de base (51...53), qui sont adaptées chacune, en ce qui concerne leurs dimensions, à la largeur (b₁) de la bande métallique (101, 102) et ces parties de bande métallique (2) sont ensuite directement soudées afin d'obtenir la bande métallique (101, 102).

7. Procédé selon la revendication 4 ou 5, **caractérisé en ce que**
- a) plusieurs parties de bande métallique sont séparées de l'au moins une bande de base (51...53) et celles-ci sont soudées afin d'obtenir un produit intermédiaire (61...63) ou b) plusieurs bandes de base (51...53) sont soudées directement et sans coupe de séparation afin d'obtenir un produit intermédiaire (61...63) et
- le produit intermédiaire (61...63) est découpé transversalement par rapport au cordon de soudure (4) qui en résulte respectivement transversalement aux cordons de soudure (4) qui en résultent et les parties de produit intermédiaire (71...73) qui en résultent sont soudées afin d'obtenir au moins une bande métallique (101, 102).

8. Procédé selon la revendication 7, **caractérisé en ce que** plusieurs parties de produit intermédiaire (71...73) sont soudées afin d'obtenir une bande métallique (101, 102).

9. Procédé selon la revendication 7, **caractérisé en ce qu'**une seule partie de produit intermédiaire (71...73) est soudée afin d'obtenir une bande métallique (101, 102).

10. Procédé selon l'une des revendications 4 à 9, **caractérisé en ce que** la découpe d'au moins deux parties de bande métallique (2) respectivement d'au moins deux parties de bande de base respectivement d'au moins deux parties de produit intermédiaire (71...73) a lieu en une étape respectivement simultanément.

11. Procédé selon l'une des revendications 4 à 10, **caractérisé en ce que** la découpe d'une partie de bande métallique (2) respectivement d'une partie de bande de base respectivement d'une partie de produit intermédiaire (71...73) a lieu le long d'une ligne de séparation droite (8).

12. Procédé selon l'une des revendications 4 à 11, **caractérisé en ce que** la bande métallique (101, 102) est poncée après la soudure.

13. Procédé selon la revendication 12, **caractérisé en ce que** la bande métallique (101, 102) est polie après le ponçage.

14. Procédé selon la revendication 12 ou 13, **caractérisé en ce que** la bande métallique (101, 102) est revêtue après le ponçage ou le polissage.

15. Utilisation d'une bande métallique sans fin (101, 102) avec une extension longitudinale
/ une circonférence (l₁) entre 1 m et 200 m, une extension en largeur (b₁) entre 1 m et 10 m et une épaisseur entre 0,3 mm et 2,5 mm, qui est fabriquée par soudure de plusieurs parties de bande métallique (2), dans laquelle une direction de laminage (3) des parties de bande métallique (2) et tous les cordons de soudure (4) s'étendent transversalement par rapport à l'extension longitudinale / à la circonférence (l₁) de la bande métallique (101, 102), et la direction de laminage (3) s'étend parallèlement aux cordons de soudure (4), dans une presse à bande ou sur un banc d'essai de véhicule ou dans un four de cuisson ou dans une machine de fabrication de papier ou dans une machine de fabrication de cellulose.
